# EUROPÄISCHE PATENTSCHRIFT

(11) **EP 3 183 717 B1**
(45) Veröffentlichungstag und Bekanntmachung des Hinweises auf die Patenterteilung: **27.11.2019**
(21) Anmeldenummer: 15791532.3
(22) Anmeldetag: 22.10.2015
(51) Int. Cl.: G06T 19/00

(54) **VORRICHTUNG UND VERFAHREN ZUR DARSTELLUNG VON STRUKTURINFORMATION ÜBER EIN TECHNISCHES OBJEKT**
APPARATUS AND METHOD FOR PRESENTING STRUCTURE INFORMATION ABOUT A TECHNICAL OBJECT
DISPOSITIF ET PROCÉDÉ DE REPRÉSENTATION D'UNE INFORMATION DE STRUCTURE SUR UN OBJET TECHNIQUE

(30) Priorität: 04.12.2014 DE 102014224851
(43) Veröffentlichungstag der Anmeldung: 28.06.2017
(73) Patentinhaber: Siemens Mobility GmbH, 81739 München (DE)
(72) Erfinder: MAYER, Hermann Georg, 83209 Prien am Chiemsee (DE)
(86) Internationale Anmeldenummer: PCT/EP2015/074440
(87) Internationale Veröffentlichungsnummer: WO 2016/087121

(56) Entgegenhaltungen:
- DE-A1-102010 013 420
- Anonymous: "Augmented Reality - Virtual x-ray vision", , 24. November 2010 (2010-11-24), XP055246078, Gefunden im Internet: URL:https://www.volkswagen-media-services. com/en/detailpage/-/detail/Augmented-Reali ty--Virtual-x-ray-vision/view/162681/6e1e0 15af7bda8f2a4b42b43d2dcc9b5?p_p_auth=NmWk6 uS4 [gefunden am 2016-01-29]
- STANIMIROVIC DARKO ET AL: "[Poster] A Mobile Augmented reality system to assist auto mechanics", 2014 IEEE INTERNATIONAL SYMPOSIUM ON MIXED AND AUGMENTED REALITY (ISMAR), IEEE, 10. September 2014 (2014-09-10), Seiten 305-306, XP032676165, DOI: 10.1109/ISMAR.2014.6948462 [gefunden am 2014-11-05]
- MARNER MICHAEL R ET AL: "Improving procedural task performance with Augmented Reality annotations", 2013 IEEE INTERNATIONAL SYMPOSIUM ON MIXED AND AUGMENTED REALITY (ISMAR), IEEE, Oktober 2013 (2013-10), Seiten 39-48, XP032534744, DOI: 10.1109/ISMAR.2013.6671762 [gefunden am 2013-11-20]

## Beschreibung

Die Struktur und Konstruktion von technischen Objekten, wie z.B. Fahrzeugen, Gebäuden, Maschinen, Geräten, Schaltungen und Anlagen, wird zunehmend komplexer. Eine eingehende Kenntnis relevanter Strukturen eines jeweiligen technischen Objekts ist insbesondere für Wartungs-, Reparatur- und/oder Rettungsarbeiten oft unerlässlich; z.B. die Kenntnis, wo in einem Gebäude stromführende Leitungen verlaufen oder an welcher Stelle sich eine deformierte Tür eines Unfallwagens aufstemmen lässt. Bei Kraftfahrzeugen wird deshalb häufig ein Mitführen einer sogenannten Rettungskarte empfohlen, auf der kritische Bauteile, wie Tank, Airbags oder Druckzylinder verzeichnet sind. Im Notfall können Einsatzkräfte auf diese Strukturdaten zugreifen, um eine rasche und sichere Rettung zu gewährleisten. Eine derartige Rettungskarte kann jedoch komplexe Strukturdaten nur begrenzt wiedergeben. Zudem ist eine Darstellung von dynamischen Größen, wie z.B. Sensorwerten bzgl. der Motortemperatur oder des Tankfüllstandes naturgemäß nicht möglich.

Die Offenlegungsschrift DE 10 2010 013420 A1 offenbart eine Vorrichtung zur Darstellung von Strukturinformation über ein technisches Objekt, wobei mittels einer Projektionseinrichtung ein Strukturbild des Objektes auf das technische Objekt projiziert wird.

Es ist Aufgabe der vorliegenden Erfindung, eine Vorrichtung und ein Verfahren zur Darstellung von Strukturinformation über ein technisches Objekt anzugeben, die eine flexiblere und übersichtlichere Darstellung erlauben.

Gelöst wird diese Aufgabe durch eine Vorrichtung nach Patentanspruch 1, durch ein Verfahren nach Patentanspruch 12 sowie durch ein Computerprogrammprodukt nach Patentanspruch 13.

Erfindungsgemäß ist zur Darstellung von Strukturinformation über ein technisches Objekt, z.B. ein Fahrzeug, ein Gebäude, ein Flugzeug, eine Maschine, ein Gerät, eine Schaltung oder eine Anlage eine Vorrichtung, beispielsweise ein Mobilgerät wie z.B. ein Smartphone, mit einem Identifizierungsmodul, einem Modellierungsmodul, einem Bilderzeugungsmodul sowie mit einem Projektionsmodul vorgesehen. Das Identifizierungsmodul dient dabei zum Identifizieren des technischen Objekts. Das Modellierungsmodul ist zum Bereitstellen eines Strukturmodells des identifizierten technischen Objekts sowie zum jeweils spezifischen Ermitteln einer äußerlich erkennbaren Objektstruktur des technischen Objekts und einer der Objektstruktur räumlich zugeordneten, inneren Strukturinformation über das technische Objekt anhand des Strukturmodells eingerichtet. Das Bilderzeugungsmodul dient zum Erzeugen eines Strukturbilds des technischen Objekts, zum projektionstreuen Einfügen der Objektstruktur in das Strukturbild sowie zum Einfügen der Strukturinformation in das Strukturbild in bildlicher Zuordnung zur Objektstruktur in einer zur Darstellungsweise der Objektstruktur unterschiedlichen Darstellungsweise. Das Projektionsmodul dient schließlich zum Projizieren des Strukturbildes auf das technische Objekt.

Durch die Projektion des auch innere Strukturinformation enthaltenden Strukturbildes auf das technische Objekt kann einem Benutzer der erfindungsgemäßen Vorrichtung unmittelbar und intuitiv am technischen Objekt selbst angezeigt werden, wo z.B. eine äußerlich nicht sichtbare Struktur verborgen ist oder wo ein Ansatzpunkt für eine Bohrung oder eine andere technische Maßnahme liegt. Die unterschiedliche Darstellungsweise von äußerlich erkennbarer Objektstruktur und innerer Strukturinformation erleichtert eine Ausrichtung der Projektion und verbessert die Unterscheidbarkeit innerer und äußerer Strukturen.

Vorteilhafte Ausführungsformen und Weiterbildungen der Erfindung sind in den abhängigen Ansprüchen angegeben.

Nach einer vorteilhaften Ausführungsform der Erfindung kann ein Ausrichtungsmodul vorgesehen sein zum Erfassen, ob sich die auf das technische Objekt projizierte Objektstruktur mit einer korrespondierenden Oberflächenstruktur des technischen Objekts deckt.

Auf diese Weise kann erfasst werden, wann die Projektion korrekt auf das technische Objekt ausgerichtet ist und es können abhängig davon vorgegebene Aktionen ausgelöst werden.

Weiterhin kann das Modellierungsmodul zum Ermitteln einer Projektionsoberfläche des technischen Objekts anhand des Strukturmodells eingerichtet sein. Das Bilderzeugungsmodul kann dann das Strukturbild abhängig von einer Form der ermittelten Projektionsoberfläche dergestalt erzeugen, dass sich die projizierte Objektstruktur bei Projektion auf das technische Objekt mit einer korrespondierenden Oberflächenstruktur des technischen Objekts zur Deckung bringen lässt.

Die Einbeziehung der Form der Projektionsoberfläche erlaubt es in der Regel, das projizierte Strukturbild so zu entzerren, dass die darzustellenden Objektstrukturen auch bei gekrümmten Projektionsoberflächen maßstabsgetreu wiedergegeben werden.

Nach einer vorteilhaften Weiterbildung der Erfindung kann ein Empfangsmodul zum Empfangen von Zustandsinformation über einen räumlich der Objektstruktur zugeordneten Zustand des technischen Objekts vorgesehen sein. Das Empfangsmodul kann drahtlos und/oder drahtgebunden mit dem technischen Objekt koppelbar sein. Das Bilderzeugungsmodul kann dann zum Einfügen der Zustandsinformation in das Strukturbild in bildlicher Zuordnung zur Objektstruktur eingerichtet sein. Die Zustandsinformation kann insbesondere Sensordaten von einem Sensor des technischen Objekts umfassen.

Auf diese Weise können auch dynamische Größen, wie z.B. Temperatur, Druck etc. des technischen Objekts projiziert werden.

Ferner kann eine Kamera zum Aufnehmen eines Kamerabildes vom technischen Objekt, von einer Umgebung des technischen Objekts und/oder von einer Umgebung der Vorrichtung vorgesehen sein. Das Kamerabild kann von einem mit der Kamera gekoppelten Bildverarbeitungsmodul ausgewertet werden.

Insbesondere kann das Bildverarbeitungsmodul mit dem Ausrichtungsmodul gekoppelt sein und dazu eingerichtet sein, die Deckung der auf das technische Objekt projizierten Objektstruktur mit der korrespondierenden Oberflächenstruktur des technischen Objekts anhand des Kamerabildes zu erkennen.

Dies erlaubt eine automatische Erkennung der korrekten Ausrichtung der Projektion.

Weiterhin kann das Bildverarbeitungsmodul mit dem Identifizierungsmodul gekoppelt sein und das Identifizierungsmodul zum Identifizieren des technischen Objekts anhand des Kamerabildes eingerichtet sein. Auf diese Weise kann beispielsweise eine am technischen Objekt angebrachte Markierung, wie z.B. eine QR-Code-Markierung von der Kamera aufgenommen werden und aus dem Kamerabild ein das technische Objekt identifizierender QR-Code extrahiert werden.

Nach einer vorteilhaften Weiterbildung der Erfindung können das Projektionsmodul und das Bilderzeugungsmodul dazu eingerichtet sein, sog. strukturiertes Licht auf das technische Objekt zu projizieren. Das Bildverarbeitungsmodul kann dann dazu eingerichtet sein, aus einem Kamerabild des projizierten strukturierten Lichts eine Position, eine Orientierung und/oder eine Form einer Projektionsoberfläche des technischen Objekts zu ermitteln.

Die Auswertung von Kamerabildern von projiziertem strukturiertem Licht erlaubt in der Regel eine verhältnismäßig genaue räumliche Vermessung des technischen Objekts.

Nach einer weiteren Ausführungsform der Erfindung kann ein Positionserfassungsmodul zum Erfassen einer Position und/oder Orientierung des technischen Objekts relativ zur Vorrichtung vorgesehen sein. Das Bilderzeugungsmodul kann dann das Strukturbild abhängig von der erfassten Position und/oder Orientierung des technischen Objekts erzeugen.

Insbesondere kann das Positionserfassungsmodul mit dem Bildverarbeitungsmodul gekoppelt und zum Erfassen der Position und/oder Orientierung des technischen Objekts anhand des Kamerabildes eingerichtet sein.

Weiterhin kann das Positionserfassungsmodul einen Bewegungssensor, Beschleunigungssensor, Lagesensor, Orientierungssensor und/oder Satellitennavigationsempfänger zum Erfassen einer Bewegung, Lage, Orientierung und/oder Position der Vorrichtung aufweisen. Das Bilderzeugungsmodul kann dann dazu eingerichtet sein, das Strukturbild nach Erfassen einer Deckung der auf das technische Objekt projizierten Objektstruktur mit einer korrespondierenden Oberflächenstruktur des technischen Objekts gemäß der erfassten Bewegung, Lage, Orientierung und/oder Position der Vorrichtung nachzuführen. Insbesondere kann das Bildverarbeitungsmodul hierbei die Bewegung der Vorrichtung durch Ermitteln eines optischen Flusses anhand eines oder mehrerer Kamerabilder erfassen.

Mittels des Positionserfassungsmoduls können Orientierung, Skalierung sowie ein zu projizierender Bildausschnitt des Strukturbilds abhängig von der erfassten Position und/oder Orientierung des technischen Objekts bestimmt und/oder nachgeführt werden.

Ein Ausführungsbeispiel der Erfindung wird nachfolgend anhand der Zeichnung näher erläutert. Dabei zeigen jeweils in schematischer Darstellung
- Figur 1: ein technisches Objekt sowie ein erfindungsgemäßes Mobilgerät zur Darstellung von Strukturinformation über dieses technische Objekt,
- Figur 2: ein durch das Mobilgerät erzeugtes Strukturbild des technischen Objekts,
- Figur 3: eine Projektion des Strukturbildes auf das technische Objekt und
- Figur 4: eine Veranschaulichung einer Nachführung dieser Projektion bei Bewegung des Mobilgerätes.

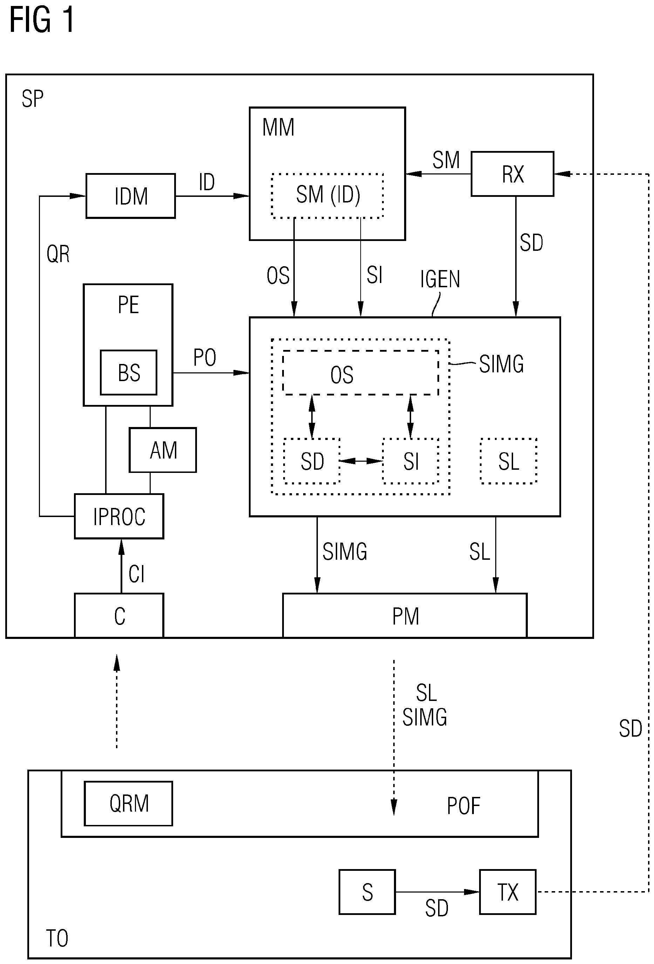

In Figur 1 sind eine erfindungsgemäße, als Mobilgerät implementierte Vorrichtung SP zur Darstellung von Strukturinformation über ein technisches Objekt TO sowie dieses technische Objekt TO selbst schematisch dargestellt.

Das technische Objekt TO kann beispielsweise ein Fahrzeug, ein Flugzeug, ein Gebäude, eine Maschine, ein Gerät, eine Schaltung oder eine Anlage sein. Es verfügt vorzugsweise über einen Sensor S zur Erfassung von Sensordaten SD als Zustandsinformation über das technische Objekt TO. Die Sensordaten SD können z.B. Temperatur, Druck, Füllstand oder andere dynamische Größen des technischen Objekts TO oder bestimmter räumlich begrenzter Bereiche desselben betreffen. Die Sensordaten SD werden vom Sensor S vorzugsweise in Echtzeit erfasst.

Das technische Objekt TO weist weiterhin einen Sender TX zum vorzugsweise drahtlosen Senden der Sensordaten SD, z.B. über eine sogenannte Bluetooth-Schnittstelle auf. Alternativ oder zusätzlich kann der Sender TX auch zum Senden der Sensordaten SD über eine oder mehrere drahtgebundene Schnittstellen eingerichtet sein. Insbesondere können mehrere, unterschiedlich am technischen Objekt TO positionierte Schnittstellen vorgesehen sein, die unterschiedliche Sensordaten übermitteln. Auf diese Weise kann ein Benutzer durch Auswahl der Schnittstelle an die das Mobilgerät SP gekoppelt wird, die zu übermittelnden Sensordaten einschränken.

Eine äußere Oberfläche des technischen Objekts TO dient als Projektionsoberfläche POF für eine Projektion eines Strukturbildes durch das erfindungsgemäße Mobilgerät SP auf das technische Objekt TO. Auf der Projektionsoberfläche POF befinden sich äußerlich, vorzugsweise visuell erkennbare Objektmerkmale QRM des technischen Objekts TO. Im vorliegenden Ausführungsbeispiel sind als äußerlich erkennbare Objektmerkmale auf das technische Objekt TO aufgebrachte Markierungen, z.B. sogenannte QR-Code-Markierungen QRM vorgesehen. Derartige QR-Code-Markierungen QRM können vorteilhafterweise zugleich zur Identifizierung des technischen Objekts TO dienen.

Das erfindungsgemäße Mobilgerät SP weist ein Projektionsmodul PM auf, z.B. einen LED-Projektor oder eine Projektionseinrichtung mit einem oder mehreren abgelenkten Laserstrahlen. Als Mobilgerät SP kann beispielsweise ein mit einem LED-Projektor ausgestattetes Smartphone verwendet werden.

Das Mobilgerät SP verfügt weiterhin über ein Positionserfassungsmodul PE zum Erfassen einer Position und/oder Orientierung PO des technischen Objekts TO relativ zum Mobilgerät SP. Das Positionserfassungsmodul PE umfasst seinerseits einen Bewegungssensor, Beschleunigungssensor, Lagesensor, Orientierungssensor, Satellitennavigationsempfänger und/oder einen anderen Positionssensor BS zum Erfassen einer Bewegung, Lage, Orientierung und/oder Position des Mobilgerätes SP. Derartige Positionssensoren BS können z.B. mittels eines Gyroskops, Hall-Sensors oder eines Kompasses implementiert sein.

Das Mobilgerät SP umfasst ferner eine Kamera C zum Aufnehmen eines Kamerabildes CI vom technischen Objekt TO, von einer Umgebung des technischen Objekts TO und/oder von einer Umgebung des Mobilgerätes SP. Die Kamera C kann für Aufnahmen von Kamerabildern CI im sichtbaren Licht, im Infrarotlicht und/oder im Ultraviolettlicht geeignet sein. Anstelle oder zusätzlich zur Kamera kann auch ein 3D-Scanner vorgesehen sein zum Abtasten des technischen Objekts TO, der Umgebung des technischen Objekts TO und/oder der Umgebung des Mobilgerätes SP. Auf diese Weise abgetastete 3D-Formen können anstelle oder zusätzlich zum Kamerabild CI verwendet werden. Das Mobilgerät SP weist weiterhin ein mit der Kamera C sowie dem Positionserfassungsmodul PE gekoppeltes Bildverarbeitungsmodul IPROC zum Auswerten des Kamerabildes CI auf. Hierdurch kann das Positionserfassungsmodul PE die relative Position und/oder Orientierung PO des technischen Objekts TO und des Mobilgerätes SP zueinander anhand des durch das Bildverarbeitungsmodul IPROC ausgewerteten Kamerabildes CI des technischen Objekts TO, der Umgebung des technischen Objekts TO und/oder der Umgebung des Mobilgerätes SP erfassen.

Vorzugsweise kann vorgesehen sein, sogenanntes strukturiertes Licht SL mittels des Projektionsmoduls PM auf das technische Objekt TO zu projizieren. Anhand eines Kamerabildes des auf die Projektionsoberfläche POF projizierten strukturierten Lichts SL kann dann die relative Position und/oder Orientierung PO sowie eine Form der Projektionsoberfläche POF ermittelt werden. Die relative Position und/oder Orientierung PO wird vom Positionserfassungsmodul PE zu einem Bilderzeugungsmodul IGEN übermittelt.

Das Mobilgerät SP verfügt weiterhin über ein Identifizierungsmodul IDM zum Identifizieren des technischen Objekts TO vorzugsweise anhand eines Kamerabildes CI des technischen Objekts TO. Im vorliegenden Ausführungsbeispiel werden durch das Bildverarbeitungsmodul IPROC die auf dem technischen Objekt TO aufgebrachten QR-Code-Markierungen QRM im Kamerabild CI detektiert und ein Dateninhalt, d.h. ein QR-Code QR der QR-Code-Markierungen QRM extrahiert und zum Identifizierungsmodul IDM übermittelt. Das Identifizierungsmodul IDM ermittelt daraus eine eindeutige Objektkennung ID des technischen Objekts TO und/oder eines der jeweiligen QR-Code-Markierung zugeordneten Bereichs des technischen Objekts TO. Alternativ oder zusätzlich können auch andere Objektmerkmale des technischen Objekts TO anhand des Kamerabildes CI detektiert und zur Identifikation genutzt werden. Sofern die Kamera C infrarot- oder ultraviolettempfindlich ist, können auch für Menschen unsichtbare Markierungen auf dem technischen Objekt aufgebracht und vom Bildverarbeitungsmodul IPROC ausgewertet werden.

Alternativ oder zusätzlich zur automatischen Identifizierung des technischen Objekts TO anhand der Objektmerkmale QRM kann auch vorgesehen sein, das technische Objekt anhand einer Benutzereingabe, z.B. eines Kraftfahrzeugtyps oder einer Raumnummer zu identifizieren.

Erfindungsgemäß verfügt das Mobilteil SP über ein Modellierungsmodul MM, das ein vorzugsweise dreidimensionales Strukturmodell SM des identifizierten technischen Objekts TO bereitstellt. Das Strukturmodell SM des technischen Objekts TO kann durch das Modellierungsmodul MM z.B. mittels eines Empfangsmoduls RX empfangen und aufbereitet werden. Das Empfangsmodul RX kann das Strukturmodell SM beispielsweise über Mobilfunk, WLAN und/oder Bluetooth oder über eine drahtgebundene Schnittstelle empfangen.

Durch das Strukturmodell SM wird eine äußerlich erkennbare Objektstruktur OS des technischen Objekts TO sowie innere Strukturinformation SI über das technische Objekt dargestellt. Das Strukturmodell SM beinhaltet die Objektstruktur OS und die Strukturinformation SI in einer dem realen technischen Objekt TO entsprechenden räumlichen Zuordnung zueinander. Insbesondere ist die Strukturinformation SI in ihrer relativen Position zu den Objektmerkmalen QRM dargestellt. Die Objektstruktur OS korrespondiert zu äußerlich sichtbaren Oberflächenstrukturen des technischen Objekts, vorzugsweise zu mehreren visuell gut erkennbaren statischen Objektmerkmalen oder Objektmarkierungen des technischen Objekts TO. Dies können z.B. Türkanten, Türecken, Türschilder etc. jeweils in positionstreuer räumlicher Zuordnung zu anderen Objektmerkmalen des technischen Objekts TO sein. Im vorliegenden Ausführungsbeispiel werden zu diesem Zweck insbesondere die QR-Code-Markierungen QRM benutzt. Dazu sind die QR-Code-Markierungen QRM sowie ihre jeweilige Position auf dem technischen Objekt TO im Strukturmodell SM hinterlegt.

Die Strukturinformation SI gibt innere Strukturen, vorzugsweise äußerlich nicht oder nur schwer erkennbare Strukturen des technischen Objekts TO wieder. Dies kann z.B. ein Verlauf von unter der Objektoberfläche verborgenen Leitungen oder anderen technischen Strukturen sein. Diese werden durch das Strukturmodell SM in ihrer räumlichen Zuordnung zur äußerlich erkennbaren Objektstruktur OS dargestellt.

Das Modellierungsmodul MM ermittelt anhand des identifizierten Strukturmodells SM die Objektstruktur OS sowie die Strukturinformation SI und übermittelt diese zum Bilderzeugungsmodul IGEN. Darüber hinaus empfängt das Empfangsmodul RX die Sensordaten SD drahtlos vom Sender TX des technischen Objekts TO und übermittelt die Sensordaten SD ebenfalls zum Bilderzeugungsmodul IGEN. Das Strukturmodell SM enthält vorzugsweise eine Information über eine relative Position des Sensors S im technischen Objekt TO, so dass das Modellierungsmodul MM die Sensordaten SD relativ zur Objektstruktur OS und der Strukturinformation SI räumlich positionieren kann und diese Positionierung ebenfalls zum Bilderzeugungsmodul IGEN übermittelt.

Das Bilderzeugungsmodul IGEN dient zum Erzeugen eines Strukturbildes SIMG sowie zum Erzeugen des strukturierten Lichts SL. Das Bilderzeugungsmodul IGEN fügt die Objektstruktur OS, die Strukturinformation SI sowie die Sensordaten SD, die einander räumlich zugeordnet sind, jeweils in entsprechender projektionstreuer bildlicher Zuordnung in das Strukturbild SIMG ein. Die Strukturinformation SI und die Sensordaten SD werden dabei in einer zur Darstellungsweise der Objektstruktur OS unterschiedlichen Darstellungsweise eingefügt. Die Darstellungsweisen können sich dabei z.B. bezüglich ihrer Farbe, Helligkeit, ihrem Kontrast etc. unterscheiden. Die bildliche Zuordnung innerhalb des Strukturbildes SIMG ist in Figur 1 durch Doppelpfeile veranschaulicht. Das Bilderzeugungsmodul IGEN bestimmt eine Orientierung, Skalierung, Perspektive und/oder einen dargestellten Bildausschnitt des Strukturbildes SIMG gemäß der relativen Position und/oder Orientierung PO sowie gemäß der Form der Projektionsoberfläche POF. Dies erfolgt derart, dass sich ein Inhalt des Strukturbildes SIMG bei Projektion auf das technische Objekt TO mit einer korrespondierenden Oberflächenstruktur des technischen Objekts zur Deckung bringen lässt. Die Einbeziehung der Oberflächenform erlaubt es, das projizierte Strukturbild SIMG so zu entzerren, dass die darzustellenden Objektstrukturen maßstabsgetreu wiedergegeben werden.

Das erzeugte Strukturbild SIMG wird vom Bilderzeugungsmodul IGEN zum Projektionsmodul PM übermittelt und von diesem auf die Projektionsoberfläche POF des technischen Objekts TO projiziert.

Die Projektion der Objektstruktur OS wird mit den dazu korrespondierenden Objektmerkmalen, hier QRM, manuell und/oder automatisch zur Deckung gebracht. Wenn sich Projektion und die tatsächlichen Objektmerkmale QRM decken, ist die Projektion ausgerichtet. Zur Erfassung einer erfolgten Ausrichtung ist ein Ausrichtungsmodul AM vorgesehen. Das Ausrichtungsmodul AM ist mit dem Bildverarbeitungsmodul IPROC sowie mit dem Positionserfassungsmodul PE gekoppelt. Die Erfassung der Ausrichtung kann automatisch anhand des Kamerabildes CI des technischen Objekts TO und/oder manuell durch Betätigen eines Schalters oder Druckknopfs erfolgen. Eine solche Erfassung der korrekten Ausrichtung wird häufig auch als Registrierung bezeichnet.

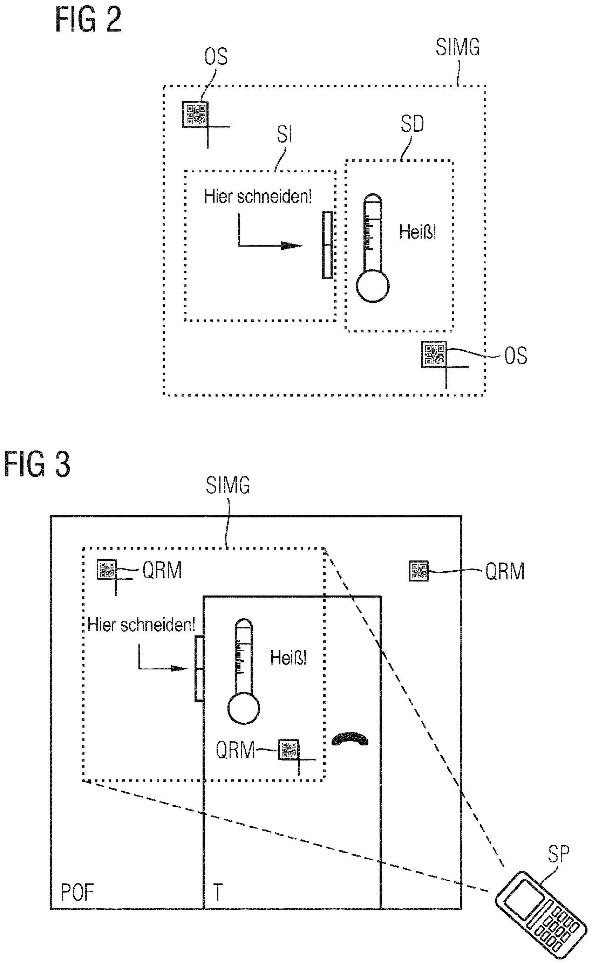

Figur 2 zeigt eine detailliertere schematische Darstellung des erzeugten Strukturbildes SIMG. Als äußerlich erkennbare Objektstruktur OS des technischen Objekts TO sind Bilder der QR-Code-Markierungen QRM entsprechend ihrer Position zueinander und zu anderen äußerlich erkennbaren Objektstrukturen sowie korrespondierend zu äußerlich sichtbaren Objektmerkmalen oder Objektmarkierungen des technischen Objekts TO eingefügt. Die Bilder der QR-Code-Markierungen QRM sind formschlüssig durch Fadenkreuze ergänzt, die als die Ausrichtung erleichternde Projektionsstrukturen fungieren.

Als Strukturinformation SI ist ein äußerlich nicht sichtbares Scharnier an seiner korrekten relativen Position bzgl. der QR-Code-Markierungen QRM in das Strukturbild SIMG eingefügt. Zusätzlich ist eine Kurzbeschreibung "Cut here!" mit einem entsprechenden Pfeil enthalten. Weiterhin ist als Zustandsinformation SD ein eine Temperatur in der Nähe des Scharniers veranschaulichendes Bild eines Thermometers zusammen mit einer Kurzbeschreibung "Hot!" in das Strukturbild SIMG eingefügt. Die Strukturinformation SI und die Zustandsinformation SD sind z.B. in einer anderen Farbe dargestellt als die Objektstrukturen OS.

Figur 3 veranschaulicht eine Projektion des Strukturbildes SIMG auf die Projektionsoberfläche POF des technischen Objekts TO. Beispielhaft sei als Projektionsoberfläche POF eine Wand eines Gebäudes oder eines Flugzeuges mit einer Tür T, z.B. einer Tür zu einem Maschinenraum angenommen. Die Wand weist beispielhaft drei aufgebrachte QR-Code-Markierungen QRM auf, von denen zwei in einem durch eine punktierte Linie angedeuteten Projektionskegel des Mobilgerätes SP liegen. Anhand der QR-Code-Markierungen QRM kann das Strukturmodell SM bzw. das daraus generierte Strukturbild SIMG am realen technischen Objekt TO ausgerichtet werden. Darüber hinaus erlauben die aufgebrachten QR-Code-Markierungen QRM die eindeutige Identifizierung des technischen Objekts TO sowie des räumlichen Bereichs um eine jeweils erfasste QR-Code-Markierung QRM.

Der QR-Code kann auf einfache Weise mittels der Kamera CI des Mobilgeräts SP eingelesen werden. Anhand des Kamerabildes CI kann auch die relative Position und/oder Orientierung PO der QR-Code-Markierungen QRM und des Mobilgeräts SP zueinander ermittelt werden. Anhand der ermittelten Position und/oder Orientierung PO können die für die Projektion relevanten Strukturen OS, SI und SD aus dem Strukturmodell SM erzeugt werden. Dabei können Verzerrungen berücksichtigt werden, die sich aus der im Strukturmodell SM hinterlegten und/oder der mittels des strukturierten Licht SL erfassten Form der Projektionsoberfläche POF ergeben. Das auf diese Weise erzeugte Strukturbild SIMG wird vom Projektionsmodul PM auf die Projektionsoberfläche POF projiziert und mit der korrespondierenden Oberflächenstruktur, hier den aufgebrachten QR-Code-Markierungen QRM zur Deckung gebracht. Die mitprojizierten Fadenkreuze erleichtern hierbei die korrekte Ausrichtung.

Alternativ oder zusätzlich zur Ausrichtung an den Markierungen QRM können auch andere äußerlich erkennbare Objektstrukturen OS des technischen Objekts TO projiziert werden. Im vorliegenden Fall einer auf der Projektionsoberfläche POF befindlichen Tür T kann z.B. ein äußerlich sichtbarer Türrahmen oder ein Türschild als Objektstruktur OS projiziert und mit dem realen Türrahmen bzw. Türschild des technischen Objekts TO zur Deckung gebracht werden.

Die Ausrichtung des projizierten Strukturbildes SIMG kann manuell durch den Benutzer erfolgen oder automatisch anhand der ermittelten relativen Position und/oder Orientierung PO. Im letzteren Fall wird das Strukturbild SIMG abhängig von der relativen Position und/oder Orientierung PO so erzeugt, dass dessen Projektion auf die korrespondierende Oberflächenstruktur des technischen Objekts TO ausgerichtet ist. Eine erfolgte Ausrichtung wird hierbei mittels des Ausrichtungsmoduls AM erkannt.

Die Projektion zeigt dem Benutzer des Mobilgeräts SP unmittelbar und intuitiv an, wo ein äußerlich nicht sichtbares Scharnier verborgen ist und was damit im Notfall zu tun ist. Darüber hinaus wird angezeigt, dass die Temperatur in der Umgebung des Scharniers sehr hoch ist.

Die Erfindung hat vielfältige Anwendungen bei Rettung, Wartung und/oder Reparatur. Durch die visuell unmittelbar sichtbare Überblendung des Strukturmodells SM auf das reale technische Objekt TO kann z.B. direkt ein idealer Ansatzpunkt für eine Bohrung oder eine andere technische Maßnahme dargestellt werden. Eine fehlerträchtige Übertragung von einem Darstellungsmedium auf das reale technische Objekt kann auf diese Weise in vielen Fällen vermieden werden.

Nach der erfolgten Ausrichtung bzw. Registrierung der Projektion kann diese bei Bewegung des Mobilegerätes SP automatisch nachgeführt werden.

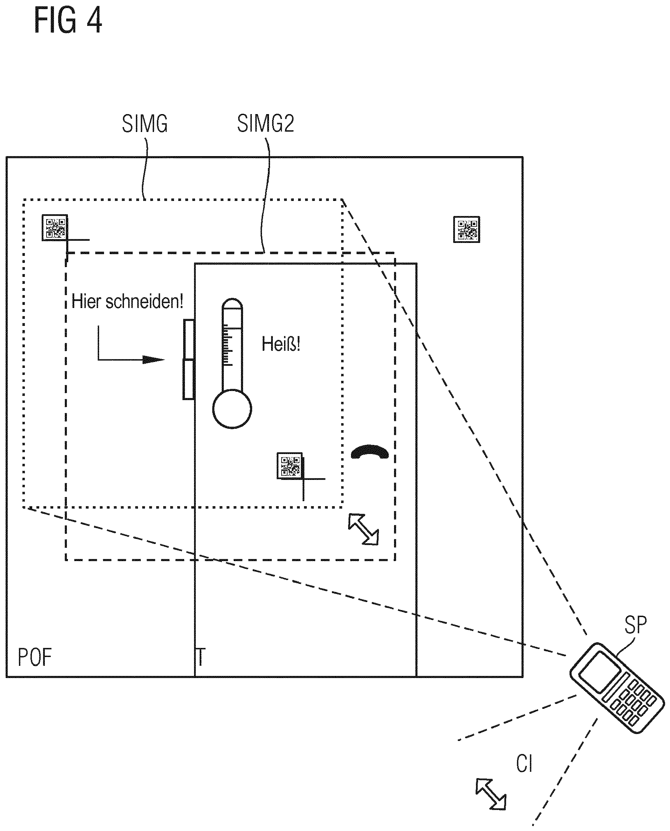

Figur 4 veranschaulicht eine solche Nachführung. Die Nachführung basiert hierbei auf einer Detektion einer Bewegung, Lage, Orientierung und/oder Position des Mobilgeräts SP nach erfolgter Registrierung. Die Detektion erfolgt mittels des Positionssensors BS und/oder anhand eines optischen Flusses, der durch Auswertung eines oder mehrerer Kamerabilder CI ermittelt wird. Anhand der detektierten Bewegung, Lage, Orientierung und/oder Position wird die relative Ausrichtung des Mobilgeräts SP zur Projektionsoberfläche POF in Echtzeit berechnet und ein entsprechend nachgeführtes Strukturbild SIMG2 generiert.

Es sei angenommen, dass sich das Mobilgerät SP nach Registrierung der Projektion des Strukturbildes SIMG, wie durch einen Doppelpfeil angedeutet, bewegt. Die Bewegung wird in Ausmaß und Richtung anhand des optischen Flusses mehrerer Kamerabilder CI detektiert und die Position der Objektstruktur OS, der Strukturinformation SI sowie der Sensordaten SD innerhalb des Strukturbildes SIMG entsprechend der detektierten Bewegung - wie durch einen Doppelpfeil angedeutet - verschoben. Auf diese Weise wird in Echtzeit ein neues nachgeführtes Strukturbild SIMG2 erzeugt und projiziert, das sich zumindest näherungsweise mit den Objektmerkmalen des technischen Objekts TO deckt. Zusätzlich kann eine Feinabstimmung anhand eines Kamerabildes CI des projizierten Strukturbildes SIMG2 durch das Ausrichtungsmoduls AM erfolgen.

Auf diese Weise können nach einer Erstregistrierung der Projektion relative Bewegungen des Mobilgeräts SP automatisch in die Projektion eingerechnet und ausgeglichen werden, so dass der Benutzer die Projektion unter Beibehaltung einer Deckung entlang der Projektionsoberfläche POF bewegen kann. Dies ermöglicht insbesondere ein freihändiges Arbeiten ohne manuelle Justierungen.

## Patentansprüche

1. Vorrichtung (SP) zur Darstellung von Strukturinformation (SI) über ein technisches Objekt (TO), mit
a) einem Identifizierungsmodul (IDM) zum Identifizieren des technischen Objekts (TO),
b) einem Modellierungsmodul (MM)
- zum Bereitstellen eines Strukturmodells (SM) des identifizierten technischen Objekts (TO) und
- zum jeweils spezifischen Ermitteln einer äußerlich erkennbaren Objektstruktur (OS) des technischen Objekts (TO) sowie einer der Objektstruktur (OS) räumlich zugeordneten, inneren Strukturinformation (SI) über das technische Objekt (TO) anhand des Strukturmodells (SM) sowie
c) einem Bilderzeugungsmodul (IGEN)
- zum Erzeugen eines Strukturbilds (SIMG) des technischen Objekts (TO),
- zum projektionstreuen Einfügen der Objektstruktur (OS) in das Strukturbild (SIMG) sowie
- zum Einfügen der Strukturinformation (SI) in das Strukturbild (SIMG) in bildlicher Zuordnung zur Objektstruktur (OS) in einer zur Darstellungsweise der Objektstruktur (OS) unterschiedlichen Darstellungsweise,
d) einem Projektionsmodul (PM) zum Projizieren des Strukturbildes (SIMG) auf das technische Objekt (TO), und
e) einem Empfangsmodul (RX) zum Empfangen von durch einen Sensor (S) des technischen Objekts (TO) erfassten und vom technischen Objekt (TO) gesendeten Sensordaten (SD),
wobei das Bilderzeugungsmodul (IGEN) zum Einfügen der Sensordaten (SD) in das Strukturbild (SIMG) in bildlieher Zuordnung zur Objektstruktur (OS) eingerichtet ist.

2. Vorrichtung nach Anspruch 1, **gekennzeichnet durch** ein Ausrichtungsmodul (AM) zum Erfassen, ob sich die auf das technische Objekt (TO) projizierte Objektstruktur (OS) mit einer korrespondierenden Oberflächenstruktur (QRM) des technischen Objekts (TO) deckt.

3. Vorrichtung nach einem der vorhergehenden Ansprüche, **dadurch gekennzeichnet,**
**dass** das Modellierungsmodul (MM) zum Ermitteln einer Projektionsoberfläche (POF) des technischen Objekts (TO) anhand des Strukturmodells (SM) eingerichtet ist, und dass das Bilderzeugungsmodul (IGEN) dazu eingerichtet ist, das Strukturbild (SIMG) abhängig von einer Form der ermittelten Projektionsoberfläche (POF) dergestalt zu erzeugen, dass sich die projizierte Objektstruktur (OS) bei Projektion auf das technische Objekt (TO) mit einer korrespondierenden Oberflächenstruktur (QRM) des technischen Objekts (TO) zur Deckung bringen lässt.

4. Vorrichtung nach einem der vorhergehenden Ansprüche, **gekennzeichnet durch**
eine Kamera (C) zum Aufnehmen eines Kamerabildes (CI) vom technischen Objekt (TO), von einer Umgebung des technischen Objekts und/oder von einer Umgebung der Vorrichtung (SP), sowie
ein mit der Kamera (C) gekoppeltes Bildverarbeitungsmodul (IPRC) zum Auswerten des Kamerabildes (CI).

5. Vorrichtung nach den Ansprüchen 2 und 4, **dadurch gekennzeichnet, dass** das Ausrichtungsmodul (AM) mit dem Bildverarbeitungsmodul (IPROC) gekoppelt ist und das Bildverarbeitungsmodul (IPROC) dazu eingerichtet ist, die Deckung der auf das technische Objekt (TO) projizierten Objektstruktur (OS) mit der korrespondierenden Oberflächenstruktur (QRM) des technischen Objekts (TO) anhand des Kamerabildes (CI) zu erkennen.

6. Vorrichtung nach Anspruch 4 oder 5, **dadurch gekennzeichnet,**
**dass** das Identifizierungsmodul (IDM) mit dem Bildverarbeitungsmodul (IPROC) gekoppelt ist und zum Identifizieren des technischen Objekts (TO) anhand des Kamerabildes (CI) eingerichtet ist.

7. Vorrichtung nach einem der Ansprüche 4 bis 6, **dadurch gekennzeichnet,**
**dass** das Projektionsmodul (PM) und das Bilderzeugungsmodul (IGEN) dazu eingerichtet sind, strukturiertes Licht (SL) auf das technische Objekt (TO) zu projizieren, und
**dass** das Bildverarbeitungsmodul (IPROC) dazu eingerichtet ist, aus einem Kamerabild (CI) des projizierten strukturierten Lichts (SL) eine Position, eine Orientierung und/oder eine Form einer Projektionsoberfläche (POF) des technischen Objekts (TO) zu ermitteln.

8. Vorrichtung nach einem der vorhergehenden Ansprüche, **dadurch gekennzeichnet,**
**dass** ein Positionserfassungsmodul (PE) zum Erfassen einer Position und/oder Orientierung (PO) des technischen Objekts (TO) relativ zur Vorrichtung (SP) vorgesehen ist, und
**dass** das Bilderzeugungsmodul (IGEN) zum Erzeugen des Strukturbilds (SIMG) abhängig von der erfassten Position und/oder Orientierung (PO) des technischen Objekts eingerichtet ist.

9. Vorrichtung nach den Ansprüchen 4 und 8, **dadurch gekennzeichnet,**
**dass** das Positionserfassungsmodul (PE) mit dem Bildverarbeitungsmodul (IPROC) gekoppelt ist und zum Erfassen der Position und/oder Orientierung (PO) des technischen Objekts (TO) anhand des Kamerabildes (CI) eingerichtet ist.

10. Vorrichtung nach Anspruch 8 oder 9, **dadurch gekennzeichnet,**
**dass** das Positionserfassungsmodul (PE) einen Bewegungssensor, Beschleunigungssensor, Lagesensor, Orientierungssensor und/oder Satellitennavigationsempfänger (BS) zum Erfassen einer Bewegung, Lage, Orientierung und/oder Position der Vorrichtung (SP) aufweist, und
**dass** das Bilderzeugungsmodul (IGEN) dazu eingerichtet ist, das Strukturbild (SIMG) nach Erfassen einer Deckung der auf das technische Objekt (TO) projizierten Objektstruktur (OS) mit einer korrespondierenden Oberflächenstruktur (QRM) des technischen Objekts (TO) gemäß der erfassten Bewegung, Lage, Orientierung und/oder Position der Vorrichtung (SP) nachzuführen.

11. Vorrichtung nach den Ansprüchen 4 und 10, **dadurch gekennzeichnet,**
**dass** das Bildverarbeitungsmodul (IPROC) dazu eingerichtet ist, die Bewegung der Vorrichtung (SP) durch Ermitteln eines optischen Flusses anhand eines oder mehrerer Kamerabilder (CI) zu erfassen.

12. Verfahren zur Darstellung von Strukturinformation (SI) über ein technisches Objekt (TO), wobei
a) das technische Objekt (TO) mittels eines Identifizierungsmoduls (IDM) identifiziert wird,
b) ein Strukturmodell (SM) des identifizierten technischen Objekts (TO) bereitgestellt wird,
c) anhand des Strukturmodells (SM)
- eine äußerlich erkennbare Objektstruktur (OS) des technischen Objekts (TO) sowie
- eine der Objektstruktur (OS) räumlich zugeordnete, innere Strukturinformation (SI) über das technische Objekt (TO)
jeweils spezifisch ermittelt werden,
d) ein Strukturbild (SIMG) des technischen Objekts (TO) erzeugt wird, wobei
- die Objektstruktur (OS) in das Strukturbild (SIMG) projektionstreu eingefügt wird, und
- die Strukturinformation (SI) in bildlicher Zuordnung zur Objektstruktur (OS) in einer zur Darstellungsweise der Objektstruktur (OS) unterschiedlichen Darstellungsweise in das Strukturbild (SIMG) eingefügt wird,
e) das Strukturbild (SIMG) derartig projiziert wird, dass sich die projizierte Objektstruktur (OS) bei Projektion auf das technische Objekt (TO) mit einer korrespondierenden Oberflächenstruktur (QRM) des technischen Objekts (TO) zur Deckung bringen lässt, und wobei
f) durch einen Sensor (S) des technischen Objekts (TO) erfasste und vom technischen Objekt (TO) gesendete Sensordaten (SD) empfangen werden, und die Sensordaten (SD) in das Strukturbild in bildlicher Zuordnung zur Objektstruktur eingefügt werden.

13. Computerprogrammprodukt zur Darstellung von Strukturinformation (SI) über ein technisches Objekt (TO), umfassend Befehle, die bei der Ausführung des Programms durch einen Computer diesen veranlassen, ein Verfahren nach Anspruch 12 auszuführen.

## Claims

1. Apparatus (SP) for presenting structure information (SI) about a technical object (TO), having
a) an identification module (IDM) for identifying the technical object (TO),
b) a modeling module (MM)
- to provide a structure model (SM) of the identified technical object (TO) and
- to specifically determine, in each case, an externally recognizable object structure (OS) for the technical object (TO) and a piece of internal structure information (SI), which is physically associated with the object structure (OS), about the technical object (TO) on the basis of the structure model (SM) and
c) an image generation module (IGEN)
- for creating a structure image (SIMG) of the technical object (TO),
- for inserting the object structure (OS) into the structure image (SIMG) in a manner true to projection and
- for inserting the structure information (SI) into the structure image (SIMG) in a graphical association with the object structure (OS) in a mode of presentation that differs from the mode of presentation of the object structure (OS),
d) a projection module (PM) for projecting the structure image (SIMG) onto the technical object (TO), and
e) a receiver module (RX) for receiving sensor data (SD) detected by a sensor (S) of the technical object (TO) and transmitted by the technical object (TO),
wherein the image generation module (IGEN) is set up for inserting the sensor data (SD) into the structure image (SIMG) in a graphical association with the object structure (OS).

2. Apparatus according to Claim 1,
**characterized by**
an alignment module (AM) for detecting whether the object structure (OS) projected onto the technical object (TO) is coextensive with a corresponding surface structure (QRM) of the technical object (TO).

3. Apparatus according to any of the previous claims,
**characterized in that**
the modeling module (MM) is set up to determine a projection surface (POF) of the technical object (TO) on the basis of the structure model (SM), and **in that** the image generation module (IGEN) is set up to generate the structure image (SIMG) depending on a shape of the determined projection surface (POF), in such a way that when projected onto the technical object (TO), the projected object structure (OS) can be brought into coextension with a corresponding surface structure (QRM) of the technical object (TO).

4. Apparatus according to any of the previous claims,
**characterized by**
a camera (C) for recording a camera image (CI) of the technical object (TO), of an environment of the technical object and/or of an environment of the apparatus (SP), and
an image processing module (IPRC) coupled with the camera (C) for evaluating the camera image (CI).

5. Apparatus according to Claims 2 and 4,
**characterized in that**
the alignment module (AM) is coupled with the image processing module (IPROC), and the image processing module (IPROC) is set up to detect the coextension of the object structure (OS) projected onto the technical object (TO) with the corresponding surface structure (QRM) of the technical object (TO) based on the camera image (CI).

6. Apparatus according to Claim 4 or 5,
**characterized in that**
the identification module (IDM) is coupled with the image processing module (IPROC), and is set up to identify the technical object (TO) based on the camera image (CI).

7. Apparatus according to any one of Claims 4 to 6,
**characterized in that**
the projection module (PM) and the image generation module (IGEN) are set up to project structured light (SL) onto the technical object (TO), and
**in that** the image processing module (IPROC) is set up to determine a position, an orientation and/or a shape of a projection surface (POF) of the technical object (TO) from a camera image (CI) of the projected structured light (SL).

8. Apparatus according to any of the previous claims,
**characterized in that**
a position detection module (PE) is provided, for detecting a position and/or orientation (PO) of the technical object (TO) relative to the apparatus (SP), and
**in that** the image generation module (IGEN) is set up to produce the structure image (SIMG) depending on the detected position and/or orientation (PO) of the technical object (TO).

9. Apparatus according to Claims 4 and 8,
**characterized in that**
the position detection module (PE) is coupled to the image processing module (IPROC) and is set up to detect the position and/or orientation (PO) of the technical object (TO) based on the camera image (CI).

10. Apparatus according to Claim 8 or 9,
**characterized in that**
the position detection module (PE) comprises a motion sensor, acceleration sensor, position sensor, orientation sensor and/or satellite navigation receiver (BS) for detecting a motion, location, orientation and/or position of the apparatus (SP), and
**in that** the image generation module (IGEN) is set up to update the structure image (SIMG) after detecting a coextension of the object structure (OS) projected onto the technical object (TO) with a corresponding surface structure (QRM) of the technical object (TO), in accordance with the detected motion, location, orientation and/or position of the apparatus (SP).

11. Apparatus according to Claims 4 and 10,
**characterized in that**
the image processing module (IPROC) is set up to detect the motion of the apparatus (SP) by determining an optical flow on the basis of one or a plurality of camera images (CI).

12. Method for presenting structure information (SI) about a technical object (TO), wherein
a) the technical object (TO) is identified by means of an identification module (IDM),
b) a structure model (SM) of the identified technical object (TO) is provided,
c) on the basis of the structure model (SM)
- an externally recognizable object structure (OS) of the technical object (TO) and
- a piece of internal structure information (SI), which is physically associated with the object structure (OS), about the technical object (TO)
are specifically determined in each case,
d) a structure image (SIMG) of the technical object (TO) is produced, wherein
- the object structure (OS) is inserted into the structure image (SIMG) in a manner true to projection, and
- the structure information (SI) is inserted into the structure image (SIMG) in graphical association with the object structure (OS) in a mode of presentation that differs from the mode of presentation of the object structure (OS),
e) the structure image (SIMG) is projected in such a way that when projected onto the technical object (TO), the projected object structure (OS) can be brought into coextension with a corresponding surface structure (QRM) of the technical object (TO), and wherein
f) sensor data (SD) detected by a sensor (S) of the technical object (TO) and transmitted by the technical object (TO) are received, and the sensor data (SD) are inserted into the structure image in a graphical association with the object structure.

13. Computer program product for presenting structure information (SI) about a technical object (TO), comprising commands which, when the program is executed by a computer, prompt said computer to execute a method according to Claim 12.

## Revendications

1. Dispositif (SP) de représentation d'une information de structure (SI) sur un objet technique (TO) comprenant
a) un module d'identification (IDM) pour identifier l'objet technique (TO),
b) un module de modélisation (MM)
- pour fournir un modèle de structure (SM) de l'objet technique (TO) identifié et
- pour le calcul respectivement spécifique d'une structure d'objet (OS) reconnaissable extérieurement de l'objet technique (TO) ainsi que d'une information de structure (OS) interne, sur l'objet technique (TO), attribuée physiquement à la structure d'objet (OS) à l'aide du modèle de structure (SM) ainsi
c) qu'un module de production d'images (IGEN)
- pour produire une image de structure (SIMG) de l'objet technique (TO),
- pour l'ajout, fidèle à projection, de la structure d'objet (OS) dans l'image de structure (SIMG) ainsi
- que pour ajouter l'information de structure (SI) dans l'image de structure (SIMG) dans une attribution figurative à la structure d'objet (OS) dans un mode de représentation différent du mode de représentation de la structure d'objet (OS),
d) un module de projection (PM) pour projeter l'image de structure (SIMG) sur l'objet technique (TO), et
e) un module de réception (RX) pour recevoir des données de capteur (SD) détectées par un capteur (S) de l'objet technique (TO) et envoyées par l'objet technique (TO),
dans lequel le module de production d'images (IGEN) est agencé pour ajouter les données de capteur (SD) dans l'image de structure (SIMG) en attribution figurative à la structure d'objet (OS).

2. Dispositif selon la revendication 1, **caractérisé par** un module d'alignement (AM) pour détecter si la structure d'objet (OS) projetée sur l'objet technique (TO) se recoupe avec une structure de surface (QRM) correspondante de l'objet technique (TO) .

3. Dispositif selon l'une des revendications précédentes, **caractérisé en ce que**
le module de modélisation (MM) est agencé pour calculer une surface de projection (POF) de l'objet technique (TO) à l'aide du modèle de structure (SM) et
que le module de production d'images (IGEN) est agencé pour produire l'image de structure (SIMG) en fonction d'une forme de la surface de projection (POF) calculée de telle façon que la structure d'objet (OS) projetée puisse être recoupée avec une structure de surface (QRM) correspondante de l'objet technique (TO) lors d'une projection sur l'objet technique (TO) .

4. Dispositif selon l'une des revendications précédentes,
**caractérisé par**
une caméra (C) pour enregistrer une image de caméra (CI) de l'objet technique (TO), d'un environnement de l'objet technique et/ou d'un environnement du dispositif (SP), ainsi que par un module de traitement d'image (IPRC) couplé à la caméra (C) pour évaluer l'image de caméra (CI).

5. Dispositif selon les revendications 2 et 4, **caractérisé en ce que** le module d'alignement (AM) est couplé au module de traitement d'image (IPROC) et le module de traitement d'image (IPROC) est agencé pour détecter le recoupement de la structure d'objet (OS) projetée sur l'objet technique (TO) avec la structure de surface (QRM) correspondante de l'objet technique (OT) à l'aide de l'image de caméra (CI).

6. Dispositif selon la revendication 4 ou 5, **caractérisé en ce que** le module d'identification (IDM) est couplé au module de traitement d'image (IPROC) et est agencé pour identifier l'objet technique (TO) à l'aide de l'image de caméra (CI).

7. Dispositif selon l'une des revendications 4 à 6,
**caractérisé en ce que**
le module de projection (PM) et le module de production d'image (IGEN) sont agencés pour projeter de la lumière structurée (SL) sur l'objet technique (TO), et
que le module de traitement d'image (IPROC) est agencé pour calculer, à partir d'une image de caméra (CI) de la lumière structurée (SL) projetée, une position, une orientation et/ou une forme d'une surface de projection (POF) de l'objet technique (TO).

8. Dispositif selon l'une des revendications précédentes,
**caractérisé en ce**
**qu'**un module de détection de position (PE) pour détecter une position et/ou une orientation (PO) de l'objet technique (TO) par rapport au dispositif (SP) est prévu
et
**que** le module de production d'images (IGEN) est agencé pour produire l'image de structure (SIMG) à l'aide de la position et/ou de l'orientation (PO) détectée de l'objet technique.

9. Dispositif selon les revendications 4 et 8, **caractérisé en ce que**
le module de détection de position (PE) est couplé au module de traitement d'image (IPROC) et est agencé pour détecter la position et/ou l'orientation (PO) de l'objet technique (TO) à l'aide de l'image de caméra (CI).

10. Dispositif selon la revendication 8 ou 9, **caractérisé en ce que**
le module de détection de position (PE) présente un capteur de mouvement, capteur d'accélération, capteur de situation, capteur d'orientation et/ou un récepteur de navigation satellite (BS) pour détecter un mouvement, une situation, une orientation et/ou une position du dispositif (SP), et
que le module de production d'images (IGEN) est agencé pour suivre l'image de structure (SIMG) après détection d'un recoupement de la structure d'objet (OS) projetée sur l'objet technique (TO) avec une structure de surface (QRM) correspondante de l'objet technique (TO) selon le mouvement, la situation, l'orientation et/ou la position détectée du dispositif (SP).

11. Dispositif selon les revendications 4 et 10, **caractérisé en ce que** le modèle de traitement d'images (IPROC) est agencé pour détecter le mouvement du dispositif (SP) par calcul d'un flux optique à l'aide d'une ou plusieurs image(s) de caméra (CI) .

12. Procédé de représentation d'une information de structure (SI) sur un objet technique (TO) dans lequel
a) l'objet technique (TO) est identifié au moyen d'un module d'identification (IDM),
b) un modèle de structure (SM) de l'objet technique (TO) identifié est fourni,
c) à l'aide du modèle de structure (SM)
- une structure d'objet (OS) reconnaissable extérieurement de l'objet technique (TO)
- ainsi qu'une information de structure (OS) interne, sur l'objet technique (TO), attribuée physiquement à la structure d'objet (OS)
sont calculées respectivement spécifiquement,
d) une image de structure (SIMG) de l'objet technique (TO) est produite, dans lequel
- la structure d'objet (OS) est ajoutée dans l'image de structure (SIMG) de manière fidèle à la projection, et
- l'information de structure (SI) est ajoutée dans l'image de structure (SIMG) dans une attribution figurative à la structure d'objet (OS) dans un mode de représentation différent du mode de représentation de la structure d'objet (OS),
e) l'image de structure (SIMG) est ainsi projetée que la structure d'objet (OS) projetée peut être recoupée lors de la projection sur l'objet technique (TO) avec une structure de surface (QRM) correspondante de l'objet technique (TO), et dans lequel
f) des données de capteur (SD) détectées par un capteur (S) de l'objet technique (TO) et envoyées par l'objet technique (TO) sont reçues et les données de capteur (SD) sont ajoutées dans l'image de structure en attribution figurative à la structure d'objet.

13. Produit de programme informatique de représentation d'une information de structure (SI) sur un objet technique (TO) comprenant des commandes qui font que lorsque le programme est exécuté par un ordinateur, un procédé selon la revendication 12 est exécuté.
